# EUROPEAN PATENT SPECIFICATION

(11) **EP 2 571 137 B1**
(45) Date of publication and mention of the grant of the patent: **24.06.2020**
(21) Application number: 12184300.7
(22) Date of filing: 13.09.2012
(51) Int. Cl.: H02J 7/02, H02J 7/00

(54) **Circuit for a small electric appliance with an accumulator and method for measuring a charging current**
Schaltung für eine kleine elektrische Anwendung mit einem Akkumulator und Verfahren zum Messen des Ladestroms
Circuit pour un petit appareil électrique avec un accumulateur et procédé permettant de mesurer un courant de charge

(30) Priority: 16.09.2011 EP 11007660
(43) Date of publication of application: 20.03.2013
(73) Proprietor: Braun GmbH, 61476 Kronberg (DE)
(72) Inventor: Klemm, Torsten, 65760 Eschborn (DE); Faranda, Leo, 63110 Rodgau (DE); Küchler, Kervin Heinrich, 64287 Darmstadt (DE)
(74) Representative: Joos, Uta Susanne

(56) References cited:
- EP-A2- 1 533 882
- JP-A- S6 335 138
- US-A- 5 453 677
- US-A1- 2003 137 283

## Description

### FIELD OF THE INVENTION

The invention relates to a circuit for a battery-operated small electric appliance, comprising a control circuit for measuring the charging current of the rechargeable battery and a DC-DC converter for powering the control circuit and optionally other loads. The invention further relates to a method for measuring the charging current of the accumulator.

### BACKGROUND OF THE INVENTION

Battery-powered electric appliances with a control circuit will need a DC-DC converter to supply the control circuit when the battery voltage is not sufficiently high to supply the control circuit, for example, because the accumulator has only one cell. If the control circuit is used for measuring the charging current of the accumulator, the measured value for the charging current is distorted by the current consumption of the DC-DC converter and any other loads.

Document US 5 453 677 A discloses a battery charger with a voltage detecting circuit for detecting a voltage of a battery during charging operation. The device comprises several diodes that form a bridge for rectifying the charging current which is supplied to a battery so as to charge the battery. The amplitude of the charging current is detected by a shunt and the value of the charging current is supplied to a microcomputer. Additional diodes cooperate with the diodes of the bridge to form a second bridge for taking out voltage for control purposes. The voltage is converted into a constant voltage by a constant voltage circuit, including capacitors and a voltage regulator. The constant voltage is used as a power source for the microcomputer. The device further comprises a battery voltage detecting circuit operable to produce a divided voltage from the battery voltage. The battery charger is thus adapted to charge batteries having different rating voltages. The divided voltage may be determined to vary between zero and its peak value, when the battery voltage varies between a possible lowest voltage and a possible highest voltage.

Document US 2003/0137283 A1 describes an electronic appliance equipped with a charging function, in which a rechargeable battery is not discharged even when the electronic appliance is operated during charge operation. When an external power supply is connected to an external power supply input terminal of the electronic appliance, a charge current flows through a diode, a switch means, and a current detecting means into the rechargeable battery so as to charge the rechargeable battery. While a control means monitors the charge current, when the rechargeable battery is brought into a full charge state and the charge current becomes lower than, or equal to a predetermined value, the control means turns OFF the switch means. When the switch means is turned OFF, since the external power supply is electrically separated from the rechargeable battery, discharging operation of the rechargeable battery is blocked. Subsequently, in the case that the external power supply is connected, since the above-described external power supply voltage is supplied via a regulator to a load and the control means, the rechargeable battery is not discharged also in this case, but a full charge state is maintained.

Document EP 1 533 882 A2 discloses a battery pack with an integrated protection circuit according to the preamble of claim 1.

### SUMMARY OF THE INVENTION

It is an object of the present invention to provide a method for measuring a charging current and a simple circuit for a battery-operated small electric appliance which enables a sufficiently accurate measurement of the charging current of the accumulator.

This object is achieved by a circuit according to claim 1.

In this circuit, the DC-DC converter is thus not at the reference potential.

Preferably the measuring input of the control circuit is connected via a low pass filter to the other end of the current sensing resistor.

The circuit is particularly suitable for a battery-operated small electrical appliance, such as an electric toothbrush or an electric shaver, the accumulator of which has only one cell, and therefore the battery voltage must be increased by the DC-DC converter to a voltage sufficient for the control circuit and optionally other loads.

Further advantages embodiments are disclosed in the dependent claims.

In a preferred small electric appliance according to claim 8 at least one further load is present, for example, a display device, which lies at reference potential, which is controllable by the control circuit, and which is supplied from the DC-DC converter. In this case, the control circuit measures the charging current only when it has switched off the at least one further load, or the control circuit provides the measured value for the charging current with at least one correction value when the at least one further load is not disabled. It is assumed that the current consumption of the additional loads is known, and corresponding correction values are stored in the control circuit.

The small electric appliance may further comprise an electric motor which is connected to the battery via a controllable switch controlled by the control circuit. Since the motor current does not flow through the current sensing resistor, it does not distort the measurement of the charging current.

A method for measuring a charging current of an accumulator by means of a current sensing resistor is described in claim 10.One end of the resistor lies at a reference potential and the other end is connected to a battery, with a circuit in which the battery voltage is increased by a DC-DC converter to a voltage sufficient for a control circuit for measuring the charging current and optionally other loads is characterized in that said control circuit measures the charging current only when the at least one further load is switched off or the control circuit provides the measured charging current with at least one correction value when the at least one further load is not switched off during the current measurement. The method is preferably used with a small electric appliance, comprising the circuit described above.

### BRIEF DESCRIPTION OF THE DRAWINGS

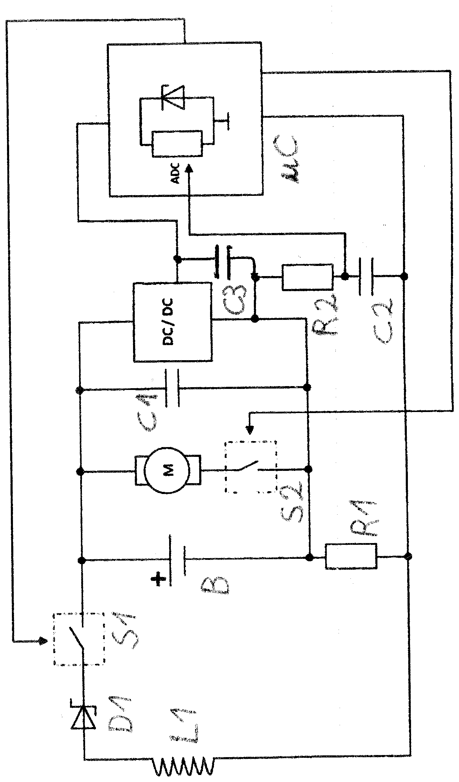

The invention is explained below using an exemplary embodiment, shown in the Figure.

### DETAILED DESCRIPTION OF THE INVENTION

The circuit illustrated in the figure has a charging coil LI, which is connected to a battery B via a diode D1, a first controllable switch S1 and a current sensing resistor R1. One end of the charging coil LI is connected to the anode of the diode D1. The other end of the charging coil LI serves as a reference potential and is connected via the current sensing resistor R1 to the negative pole of the battery B. The cathode of diode D1 is connected to the first controllable switch S1. Parallel to the battery B, a capacitor C1 and a series circuit of an electric motor M and a second controllable switch S2 is connected. Further, a DC-DC converter DC/DC is connected to the battery B. The DC-DC converter DC/DC has an output terminal to which the one end of a third capacitor C3 is connected. The other end of the third capacitor C3 is connected to the negative terminal of battery B. A control circuit uC has two terminals for its power supply, one of which is connected to the output of the DC-DC converter DC/DC and the other is connected to reference potential. The control circuit uC further has an input which is connected to the reference potential via a second capacitor C2 and is connected to the negative terminal of the battery B via a second resistor R2, and two outputs, one of which is connected to the first controllable switch S1 and the other is connected to the second controllable switch S2.

The operation of this circuit will be explained below. While charging the battery B the control circuit uC measures the charging current, i.e. the voltage at the current sensing resistor R1 via a low-pass filter (second capacitor C2, second resistor R2). The control circuit integrates the measured charging current in a conventional manner over time, for example by a counter, and terminates the charging by corresponding activation of the first controllable switch S1 when the battery is fully charged. It can be taken into account that the measurement of the charging current is falsified by the current consumption of the control circuit. When further loads are connected to the control circuit or when further loads controlled by the control circuit are connected to the DC-DC converter, for example a display device not shown in the Figure, the current consumed by these further loads is either also taken into account during the measurement of the charging current, or the measurement of the charging current takes place only from time to time, and the further loads will be switched on only if no measurement takes place. Since neither the motor current nor the current of the DC-DC converter flow through the current sensing resistor R1, these currents do not distort the measurement.

The circuit has the advantage that the resistance of the current sensing resistor R1 may be very small because both the current sensing resistor R1 and the control circuit uC are at reference potential (no difference measurement required), and therefore the control circuit uC can comprise at its input an A/D converter which can be operated with a correspondingly small reference voltage, so that a high measuring accuracy is obtained.

The control circuit uC is preferably implemented in a microcontroller.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. Circuit for a small electric appliance comprising
- a battery (B) having a positive terminal and a negative terminal,
- a control circuit (uC) for measuring the charging current of the battery (B) and
- a DC-DC converter (DC/DC) which is connected to the positive terminal and the negative terminal of the battery (B) and configured to supply the control circuit (uC) from the battery, and
- further comprising a current sensing resistor (R1),
wherein one end of the current sensing resistor (R1) lies at a reference potential and the other end is connected to the negative terminal of the battery (B), and
wherein the control circuit (uC) has
- two terminals for its power supply, one of which is connected to an output terminal of the DC-Dc converter (DC/DC) and the other is connccted to the reference potential, and
- a measurement input (ADC) which is related to the reference potential,
**characterized in that** said measuring input of the control circuit (uC) is connected to the other end of the current sensing resistor (R1) via a low pass filter having a second resistor (R2) and a second capacitor (C2), wherein the measurement input (ADC) is connected to the reference potential via the second capacitor (C2) and to the negative terminal of the battery (B) via the second resistor (R2).

2. A circuit according to claim 1, wherein the output terminal of the DC-DC converter (DC/DC) is connected to one end of a third capacitor (C3), the other end of the third capacitor (C3) being connected to the negative terminal of the battery (B).

3. A circuit according to claim 1 or 2, wherein at least one further load is provided which is connected to reference potential, which is controllable by the control circuit (uC), and which is powered by the DC-DC converter (DC/DC).

4. A circuit according to claim 3, wherein the control circuit (uC) is configured to measure the charging current only when the at least one further load is switched off.

5. A circuit according to claim 3, wherein the control circuit (uC) is configured to provide the measured charging current with at least one correction value when the at least one further load is not switched off.

6. A circuit according to any of the preceding claims, wherein the circuit comprises a charging coil (L1) wherein one end of the charging coil (L1) is connected to the positive termial of the battery (B) via a diode (D1) and a first controllable switch (S1) and the other end of the charging coil (L1) is connected to the negative terminal of the battery (B) via the current sensing resistor (R1), this other end of the charging coil (L1) serving as the reference potential.

7. A circuit according to any of the preceding claims, wherein a first capacitor (C1) is connected parallel to the battery (B).

8. Small electrical appliance, such as electric toothbrush or electric shaver, comprising a circuit according to any preceding claim.

9. Small electric appliance according to claim 8, wherein it further comprises an electric motor (M) which is connected parallel to the battery (B) via a controllable switch (S2) controlled by the control circuit (uC).

10. A method for measuring a charging current of a battery (B) by means of a circuit according to any of claims 1 to 7, **characterized in that the** control circuit (uC) measures the charging current of the battery (B) only when the at least one further load is switched off or the control circuit (uC) provides the measured charging current with at least one correction value when the at least one further load is not switched off during the current measurement.

## Patentansprüche

1. Schaltung für ein elektrisches Kleingerät, umfassend:
- eine Batterie (B), die einen positiven Anschluss und einen negativen Anschluss aufweist,
- eine Steuerschaltung (uC) zum Messen des Ladestroms der Batterie (B) und
- einen Gleichstromwandler (DC/DC), der mit dem positiven Anschluss und dem negativen Anschluss der Batterie (B) verbunden ist und dazu konfiguriert ist, die Steuerschaltung (uC) aus der Batterie zu versorgen, und
- ferner umfassend einen Stromerfassungswiderstand (R1),
wobei ein Ende des Stromerfassungswiderstands (R1) an einem Referenzpotenzial liegt und das andere Ende mit dem negativen Anschluss der Batterie (B) verbunden ist, und
wobei die Steuerschaltung (uC) aufweist:
- zwei Anschlüsse für ihre Stromversorgung, von denen einer mit einem Ausgangsanschluss des Gleichstromwandlers (DC/DC) und der andere mit dem Referenzpotenzial verbunden ist, und
- einen Messeingang (ADC), der sich auf das Referenzpotenzial bezieht,
**dadurch gekennzeichnet, dass** der Messeingang der Steuerschaltung (uC) mit dem anderen Ende des Stromerfassungswiderstands (R1) über einen Tiefpassfilter verbunden ist, der einen zweiten Widerstand (R2) und einen zweiten Kondensator (C2) aufweist, wobei der Messeingang (ADC) über den zweiten Kondensator (C2) mit dem Referenzpotenzial und über den zweiten Widerstand (R2) mit dem negativen Anschluss der Batterie (B) verbunden ist.

2. Schaltung nach Anspruch 1, wobei der Ausgangsanschluss des Gleichstromwandlers (DC/DC) mit einem Ende eines dritten Kondensators (C3) verbunden ist, wobei das andere Ende des dritten Kondensators (C3) mit dem negativen Anschluss der Batterie (B) verbunden ist.

3. Schaltung nach Anspruch 1 oder 2, wobei mindestens eine weitere Last bereitgestellt wird, die mit dem Referenzpotenzial verbunden ist, die durch die Steuerschaltung (uC) steuerbar ist, und die durch den Gleichstromwandler (DC/DC) angetrieben wird.

4. Schaltung nach Anspruch 3, wobei die Steuerschaltung (uC) dazu konfiguriert ist, den Ladestrom nur dann zu messen, wenn die mindestens eine weitere Last abgeschaltet ist.

5. Schaltung nach Anspruch 3, wobei die Steuerschaltung (uC) dazu konfiguriert ist, den gemessenen Ladestrom mit mindestens einem Korrekturwert bereitzustellen, wenn die mindestens eine weitere Last nicht abgeschaltet ist.

6. Schaltung nach einem der vorstehenden Ansprüche, wobei die Schaltung eine Ladespule (L1) umfasst, wobei ein Ende der Ladespule (L1) über eine Diode (D1) und einen ersten steuerbaren Schalter (S1) mit dem positiven Anschluss der Batterie (B) verbunden ist und das andere Ende der Ladespule (L1) über den Stromerfassungswiderstand (R1) mit dem negativen Anschluss der Batterie (B) verbunden ist, wobei dieses andere Ende der Ladespule (L1) als das Referenzpotenzial dient.

7. Schaltung nach einem der vorstehenden Ansprüche, wobei ein erster Kondensator (C1) parallel zur Batterie (B) geschaltet ist.

8. Elektrisches Kleingerät, wie eine elektrische Zahnbürste oder ein elektrischer Rasierer, umfassend eine Schaltung nach einem der vorstehenden Ansprüche.

9. Elektrisches Kleingerät nach Anspruch 8, wobei diese ferner einen Elektromotor (M) umfasst, der über einen steuerbaren Schalter (S2), der von der Steuerschaltung (uC) gesteuert wird, parallel zur Batterie (B) geschaltet ist.

10. Verfahren zum Messen eines Ladestroms einer Batterie (B) mittels einer Schaltung nach einem der Ansprüche 1 bis 7, **dadurch gekennzeichnet, dass** die Steuerschaltung (uC) den Ladestrom der Batterie (B) nur misst, wenn die mindestens eine weitere Last abgeschaltet ist, oder die Steuerschaltung (uC) den gemessenen Ladestrom mit mindestens einem Korrekturwert bereitstellt, wenn die mindestens eine weitere Last während der Strommessung nicht abgeschaltet ist.

## Revendications

1. Circuit pour un petit appareil électrique comprenant
- une batterie (B) ayant une borne positive et une borne négative,
- un circuit de commande (uC) pour mesurer le courant de charge de la batterie (B) et
- un convertisseur CC-CC (CC/CC) qui est connecté à la borne positive et à la borne négative de la batterie (B) et configuré pour alimenter le circuit de commande (uC) à partir de la batterie, et
- comprenant en outre une résistance de détection de courant (R1),
dans lequel une extrémité de la résistance de détection de courant (R1) se trouve à un potentiel de référence et l'autre extrémité est connectée à la borne négative de la batterie (B), et
dans lequel le circuit de commande (uC) a
- deux bornes pour son alimentation électrique, dont l'une est connectée à une borne de sortie du convertisseur CC-CC (CC/CC) et l'autre est connectée au potentiel de référence, et
- une entrée de mesure (ADC) qui se rapporte au potentiel de référence.
**caractérisé en ce que** ladite entrée de mesure du circuit de commande (uC) est connectée à l'autre extrémité de la résistance de détection de courant (R1) par l'intermédiaire d'un filtre passe-bas ayant une deuxième résistance (R2) et un deuxième condensateur (C2), dans lequel l'entrée de mesure (ADC) est connectée au potentiel de référence par l'intermédiaire du deuxième condensateur (C2) et à la borne négative de la batterie (B) par l'intermédiaire de la deuxième résistance (R2)

2. Circuit selon la revendication 1, dans lequel la borne de sortie du convertisseur CC-CC (CC/CC) est connectée à une extrémité d'un troisième condensateur (C3), l'autre extrémité du troisième condensateur (C3) étant connectée à la borne négative de la batterie (B).

3. Circuit selon la revendication 1 ou 2, dans lequel au moins une charge supplémentaire est fournie laquelle est connectée à un potentiel de référence, laquelle est commandable par le circuit de commande (uC), et laquelle est alimentée par le convertisseur CC-CC (CC/CC).

4. Circuit selon la revendication 3, dans lequel le circuit de commande (uC) est configuré pour mesurer le courant de charge uniquement lorsque l'au moins une charge supplémentaire est désactivée.

5. Circuit selon la revendication 3, dans lequel le circuit de commande (uC) est configuré pour fournir au courant de charge mesuré au moins une valeur de correction lorsque l'au moins une charge supplémentaire n'est pas désactivée.

6. Circuit selon l'une quelconque des revendications précédentes, dans lequel le circuit comprend une bobine de charge (L1) dans lequel une extrémité de la bobine de charge (L1) est connectée à la borne positive de la batterie (B) par l'intermédiaire d'une diode (D1) et d'un premier commutateur commandable (S1) et l'autre extrémité de la bobine de charge (L1) est connectée à la borne négative de la batterie (B) par l'intermédiaire de la résistance de détection de courant (R1), cette autre extrémité de la bobine de charge (L1) servant de potentiel de référence.

7. Circuit selon l'une quelconque des revendications précédentes, dans lequel a premier condensateur (C1) est connecté parallèle à la batterie (B).

8. Petit appareil électrique, tel qu'une brosse à dents électrique ou un rasoir électrique, comprenant un circuit selon une quelconque revendication précédente.

9. Petit appareil électrique selon la revendication 8, dans lequel il comprend en outre un moteur électrique (M) qui est connecté parallèle à la batterie (B) par l'intermédiaire d'un commutateur commandable (S2) commandé par le circuit de commande (uC).

10. Procédé de mesure d'un courant de charge d'une batterie (B) au moyen d'un circuit selon l'une quelconque des revendications 1 à 7, **caractérisé en ce que** le circuit de commande (uC) mesure le courant de charge de la batterie (B) uniquement lorsque l'au moins une charge supplémentaire est désactivée ou le circuit de commande (uC) fournit au courant de charge mesuré au moins une valeur de correction lorsque l'au moins une charge supplémentaire n'est pas désactivée pendant la mesure de courant.
